Europäisches Patentamt

European Patent Office

Office européen des brevets

(19)

(11) Publication number: **0 006 089**
**B1**

(12) **EUROPEAN PATENT SPECIFICATION**

(45) Date of publication of patent specification: **02.03.83**

(21) Application number: **78100120.1**

(22) Date of filing: **08.06.78**

(51) Int. Cl.³: **C 08 F 279/02**
//(C08F279/02, 212/08, 214/16)

(54) Preparation of impact resistant polystyrene having improved transparency.

(43) Date of publication of application:
**09.01.80 Bulletin 80/1**

(45) Publication of the grant of the patent:
**02.03.83 Bulletin 83/9**

(84) Designated Contracting States:
**BE DE FR GB NL**

(56) References cited:
**FR - A - 2 093 683**

**Encyclopedia of Polymer Science and Technology
3—584**

(73) Proprietor: **THE DOW CHEMICAL COMPANY**
**Dow Center 2030 Abbott Road Post Office Box
1967**
**Midland Michigan 48640 (US)**

(72) Inventor: **Bredeweg, Corwin Jay**
**5709 Leeway**
**Midland, Michigan (US)**
Inventor: **Dennis, Kent Seddens**
**5800 Highland**
**Midland, Michigan (US)**
Inventor: **Lyons, Charles Edward**
**2300 Bayliss**
**Midland, Michigan (US)**

(74) Representative: **Hann, Michael, Dr.**
**Marburger Strasse 38**
**D-6300 Giessen (DE)**

Preparation of impact resistant polystyrene having improved transparency

Transparent impact-resistant polymers or resinous compositions are highly desirable for many packaging operations. Polystyrene and polymethylmethacrylate are both resins having a highly desirable degree of transparency for many packaging applications; however, both polystyrene and polymethylmethacrylate are often found to be too brittle to provide a reliable package, particularly when used as containers or as vacuum-formed oriented sheet, tubs or lids. In an effort to improve the impact resistance of resins such as polystyrene, rubber has been added to the polystyrene in one manner or the other to provide either a dispersion of solid rubber particles within a polystyrene matrix or a dispersion of rubber particles containing occluded polystyrene dispersed within a polystyrene matrix. Employing such techniques a substantial increase in the impact resistance of the polymer composition is obtained; however, the resultant product is usually opaque or translucent and is unsatisfactory for packaging applications which require a transparent material. Biaxial orientation of certain rubber-containing impact-resistant styrene polymer films results in a product having improved transparency; however, when such articles are obtained in a heavier or thicker section the opacity is usually too great or the impact resistance is inadequate. In an attempt to produce transparent impact-resistant styrene polymers, considerable effort has been expended in employing as a polymer matrix a copolymer of methylmethacrylate and styrene, the methylmethacrylate and styrene being employed in such a proportion that the refractive index of the reinforcing rubber and the methylmethacrylate-styrene polymer differ by an insignificant value thereby providing a resinous body which does not scatter large amounts of light and, at least to the unaided eye, in thin sections, appears to be transparent. The resultant polymers, using refractive index matching, usually are polymers which have methylmethacrylate as a major component. Another technique of providing a rubber-reinforced styrene polymer of improved transparency is shown in U.S. 3,574,151 wherein styrene is polymerized in the presence of rubber and a small quantity of $\beta$-bromo-styrene. U.S. Patent 3,957,915 teaches the use of other bromine-containing compounds including non-terminal ethlenically unsaturated compounds for this purpose. However, these bromine compounds are costly and still further improvements in transparency are desirable. Also although bromohydrocarbons are useful chain transfer agents as discussed in Encyclopedia of Polymer Science and Technology 3—584, they are not known as equally effective in improving the transparency of impact resistant styrene polymers.

This invention provides an improved process for preparing impact resistant polymers having improved transparency and composed primarily of styrene and a reinforcing rubber.

The process of this invention comprises providing a solution of a rubber in styrene or a mixture of styrene with 35 weight percent or less of vinyltoluene, t-butylstyrene or methyl methacrylate and from 0.01 to 0.5, preferably 0.01 to 0.3, percent by weight based on the combined weight of the rubber and styrene of a monoethylenically terminally unsaturated allylic bromine-containing aliphatic compound having from 3 to 10 carbon atoms and polymerizing under free radical conditions and with agitation at least through phase inversion.

The process of this invention provides a styrene polymer structure having a dispersed phase of a reinforcing diene rubber, the diene rubber advantageously being present in a proportion of 4 to 12 parts by weight per 100 parts by weight of the combined weight of styrene and rubber. The rubber is generally in the form of a plurality of particles of cellular nature and containing occlusions of polystyrene, the particles being of both monocellular and multicellular configuration. Advantageously, the rubber particles have a weight average particle diameter not exceeding two microns and cell walls not greater than 0.15 micron in thickness, the dimensions and configuration of the rubber particles being determined by means of an electron microscope on a sample of the polymer which has been treated with osmium tetroxide in accordance with the procedure set forth in *Polymer Engineering and Science,* by K. Kato, *7,* 38 (1967). Polymers prepared in accordance with this invention will have a light absorbance, measured using a wave length of 640 millimicrons, not greater than 0.10 at a thickness of 0.254 mm. The structures will preferably have a notched izod impact value when measured in accordance with the American Society for Testing Materials, Specification D—256A of at least 0.65 foot-pounds per inch of notch (.0354 kg-meter/cm).

The rubbery reinforcing polymer may be prepared from 1,3-butadiene, isoprene, copolymers of up to 30 weight percent styrene with 1,3-butadiene or isoprene or mixtures thereof, and advantageously has an inherent viscosity in the range of 0.9 to 2.5 as determined at 25°C employing 0.3 gram of rubber per deciliter of toluene. While it is preferred to employ styrene as the sole polymerizable monomer in the process of this invention one may, if desired, utilize minor amounts, i.e., 35 weight percent or less, of other copolymerizable comonomers such as vinyltoluene, t-butylstyrene or methyl methacrylate. Of such comonomers methyl methacrylate is advantageously employed to provide products having good clarity and impact strength.

The allylic bromine-containing aliphatic compound is preferably allyl bromide, methallyl bromide, 2-(bromomethyl)-3-bromopropene, 3,3-dibromo-1-propene, 3-bromo-1-pentene, 3,4-dibromo-1-butene, 2-(dibromomethyl)-1-butene, 2-(bromomethyl)-1-butene, 2-(bromomethyl)-1-pentene, 2-(dibromomethyl)-1-pentene, 2-(bromomethyl)-1-hexene, 3-bromo-1-hexene, 2-(dibromomethyl)-1-hexene, or a mixture thereof.

If desired, in the polymerization of styrene polymers of the present invention a diluent may be employed. Usually it is desirable to employ a diluent or solvent which may be present in a quantity of up to 20 parts by weight per 100 parts styrene. The diluent generally aids in the polymerization by increasing heat transfer, by reducing the viscosity of the polymerizing mixture and in easing the problem of handling viscous syrups. Suitable diluents are hydrocarbons that are generally non-reactive under the polymerization conditions and are a solvent for the monomers and the polymer produced. Such diluents include substituted aromatic compounds such as, for example, ethylbenzene and the xylenes.

If desired, a satisfactory product can be obtained using thermal initiation although catalytic initiation is preferred. The preferred free radical initiators are those which decompose to produce alkoxy radical fragments or aryloxyradical fragments. The most preferred initiators are tertiary butyl perbenzoate, tertiary butyl peracetate and 1,1-bis(t-butyl-peroxy)cyclohexane. Usually the initiators are employed at a level of 0.01 to 0.5 weight percent based on the weight of the monomer.

Useful rubbers are well known and commercially available. Oftentimes, one or more such rubbery polymers may be employed in the polymerization, however, the total amount of the rubber should advantageously be in the proportion of from 4 to 12 parts by weight of rubbery polymer per 100 parts by weight of styrene and rubber. In dissolving the rubber in styrene or a styrene mixture, it is desirable to include with the styrene a major portion of the solvent or diluent which is to be used in order to obtain the solution as rapidly as possible. Generally, a small portion of the diluent is employed to dissolve the initiator and the bromine-containing compound such as allyl bromide, 2-(bromomethyl)-3-bromopropene or mixtures thereof. In a preferred process, for example, the reaction mixture is then raised to appropriate polymerization initiating temperature such as a temperature between 60°C and 100°C at which time the solution of the initiator and bromine-containing compound is added to the reaction mixture with agitation. The temperature of the reaction mixture is then raised to a temperature within the range of 80 to 130°C and maintained in this range for a period of 3 to 10 hours with agitation, a nitrogen or other inert atmosphere being maintained within the reactor. When the solids content of the reaction mixture reaches from 30 to 50 percent conversion, agitation may be discontinued if desired and the temperature of the reaction mixture raised over a period of 2 to 5 hours to a temperature within the range of 170 to 190°C. When polymerization, from a practical standpoint, is complete, generally in a range from 70 to 95 percent conversion of the monomers to polymer solids, the reaction mixture is devolatilized usually at a temperature from 200 to 240°C, beneficially under a vacuum of from 0.1 to 50 millimeters of mercury. The polymer may be prepared by either batch or continuous-process polymerization. The following examples serve to further illustrate this invention.

Examples 1—14

A plurality of polymerization runs were carried out employing the following procedure. A two-liter jacketed reactor having an agitator was employed in all polymerizations. The agitator was a rotatable hollow shaft having two helical vanes mounted external to the hollow shaft. The vanes had a clearance of about 1 mil. from the inner wall of the reaction vessel. When the agitator was rotated, the helical vanes forced the reaction mixture downwardly along the shaft and adjacent walls of the reaction vessel. (More conventional agitators with horizontal crossbars can also be used satisfactorily). Styrene plus 95% of the diluent employed and rubber were added to the reactor. The reactor was nitrogen-purged and heated to a temperature of about 90°C with stirring. The polymerization initiator and bromine-containing compound dissolved in the remaining 5% of diluent was then added. The agitator was set at a speed of about 20 rpm and the temperature of the reaction mixture raised to about 105°C generally cycling from 100 to 110° for a period of 4 to 5 hours. During this period, nitrogen was maintained over the reaction mixture. Periodically, samples of the reaction mixture were removed from a sampling connection on the bottom of the reaction vessel and when the reaction mixture contained between about 38 and 42 percent solids, the mixture was transferred to tubes and polymerization completed in a heating block programmed to raise the temperature of the reaction mixture from about 100° to 175°C over a period of 5 hours. At the end of that time, the solids content of the reaction mixture was from about 78 to 84 percent. The mixture was then forced from the tubes with nitrogen pressure and devolatilized in a vacuum oven maintained at a temperature of about 210°C and under a pressure of about one millimeter of mercury for a period of about one and one-half hours. At the end of one and one-half hours of devolatilization, the product was removed from the oven and maintained in an inert atmosphere for a few minutes to minimize surface yellowing. The cooled slab was then granulated and portions molded into test plaques for light absorbance testing. Light absorbance was measured using a Beckman Model B spectrophotometer wherein the film sample was placed approximately 9 centimeters from the center of the photocell light detector. The wavelength employed was 640 millimicrons and the reading obtained was corrected to 10 mils (0.254 mm) thickness. Notched Izod impact tests were conducted employing procedure ASTM D—256A.

The rubbers employed were:

Diene 55: a polybutadiene rubber of 2.30 deciliter/gram inherent viscosity at a concentration of 0.3 gram per deciliter; and

Stereon S—700: approximately 80 parts by weight butadiene and 20 parts by weight styrene in which 18% is randomly present and 2% is as block.

Taktene[R]: a polybutadiene rubber whose molecular structure is approximately 98% cis-1,4 configuration, the remaining is vinyl-1,2.

The results are set forth in the following Table.

TABLE

| Run No. | Composition[1] | Rubber | Initiator (%) | Bromine-Containing Agent (%) | Absorb. at 640 m$\mu$ | N. Izod Impact (ft-lbs/ in-notch) [kg-meters/cm] | Yield (psi) [kg/cm$^2$] | Rupture (psi) [kg/cm$^2$] | Vicat H.D. (°C) |
|---|---|---|---|---|---|---|---|---|---|
| 1 | 94 S/6 R | Diene-55 | 0.2 TBPB[2] | none | 0.12 | 1.14 [0.06] | 4339 [304] | 4339 [304] | 110 |
| 2 | ,, | ,, | ,, | 0.1 AB[3] | 0.06 | 0.88 [0.05] | 5090 [356] | 5090 [356] | 105 |
| 3 | 92 S/8 R | ,, | ,, | ,, | 0.08 | 1.03 [0.06] | 4462 [312] | 4373 [306] | 108 |
| 4 | 94 S/6 R | ,, | 0.13 TBPA[4] | ,, | 0.09 | 0.85 [0.05] | 4134 [289] | 4134 [289] | 105 |
| 5 | ,, | ,, | 0.24 Bz$_2$O$_2$[5] | ,, | 0.10 | 1.31 [0.07] | 4174 [292] | 4174 [292] | 105 |
| 6 | ,, | ,, | 0.15 TBC[6] | ,, | 0.09 | 1.33 [0.07] | 4365 [306] | 4133 [289] | 105 |

| Run No. | Composition[1] | Rubber | Initiator (%) | Bromine-Containing Agent (%) | Absorb. at 640 mμ | N. Izod Impact (ft-lbs/ in-notch) [kg-meters/cm] | Yield (psi) [kg/cm²] | Rupture (psi) [kg/cm²] | Vicat H.D. (°C) |
|---|---|---|---|---|---|---|---|---|---|
| 7 | 92 S/8 R | S—700 | 0.1 TBPB | none | 0.12 | 1.05 [0.06] | 3943 [276] | 3943 [276] | 108 |
| 8 | " | " | " | 0.15 AB | 0.07 | 0.65 [0.04] | 4627 [324] | 4627 [324] | 108 |
| 9 | " | 7% S—700 + 1% Diene-55 | " | none | 0.13 | 0.97 [0.05] | 4597 [322] | 4597 [322] | 108 |
| 10 | " | " | " | 0.1 AB | 0.07 | 0.99 [0.05] | 4438 [311] | 4438 [311] | 108 |
| 11 | " | " | " | 0.02 BMBP[7] | 0.07 | 0.92 [0.05] | 5055 [354] | 5055 [354] | 112 |
| 12 | 68 S/25 MMA/ 7R | " | 0.15 TBPB | none | 0.09 | 1.17 [0.06] | 4014 [291] | 4738 [332] | 101 |
| 13 | " | " | " | 0.20 AB | 0.05 | 1.21 [0.07] | 4377 [306] | 3992 [279] | 103 |
| 14 | " | Taktene[R] | " | " | 0.05 | 1.65 [0.09] | 4446 [311] | 4056 [284] | 104 |

1. Numbers indicate weight percent of styrene and rubber
2. TBPB = tertiary-butyl perbenzoate
3. AB = allyl bromide
4. TBPA = tertiary-butyl peracetate
5. Bz$_2$O$_2$ = benzoyl peroxide
6. TBC = 4-t-butyl-1-1-bis(t-butylperoxy)cyclohexane
7. BMBP = 2-bromomethyl-3-bromopropene

0006089

Resins of the foregoing examples within the scope of the present invention had weight average particle diameter of less than two microns and cell walls not greater than 0.15 micron in thickness. The majority of the particles showed occlusions of polystyrene. Some particles were monocellular while others were multicellular.

## Claims

1. Process for making impact resistant polystyrenes having improved transparency by polymerizing a solution of a rubber in styrene or a mixture of styrene with 35 weight percent or less of vinyltoluene, t-butylstyrene or methyl methacrylate in the presence of a bromine-containing compound and polymerizing under free radical conditions and with agitation at least through phase inversion characterized in that the polymerization is carried out in the presence of from 0.01 to 0.5 percent by weight based on the combined weight of the rubber' and styrene of a monoethylenically terminally unsaturated allylic bromine-containing aliphatic compound having from 3 to 10 carbon atoms as the bromine-containing compound.

2. Process of Claim 1 characterized in that the allylic bromine compound is allyl bromide, methallyl bromide, 2-(bromomethyl)-3-bromo-propene, 3,3-dibromo-1-propene, 3-bromo-1-pentene, 3,4-dibromo-1-butene, 2-(dibromomethyl)-1-butene, 2-(bromomethyl)-1-butene, 2-(bromomethyl)-1-pentene, 2-(dibromomethyl)-1-pentene, 2-(bromomethyl)-1-hexene, 3-bromo-1-hexene, 2-(dibromomethyl)-1-hexene, or a mixture thereof.

## Revendications

1. Procédé pour la fabrication de polystyrènes résistant au choc ayant une transparence améliorée par polymérisation d'une solution d'un caoutchouc dans le styrène ou d'un mélange de styrène contenant 35% en poids, ou moins, de vinyltoluène, de tert-butyl-styrène ou de méthacrylate de méthyle, en présence d'un composé bromé et par polymérisation dans des conditions de radicaux libres et tout en agitant au moins pendant l'inversion de phases, caractérisé par le fait que la polymérisation est effectuée en présence de 0,01 à 0,5% en poids, rapporté au poids combiné du caoutchouc et du styrène, d'un composé aliphatique bromé, allylique, à insaturation mono-éthylénique terminale ayant de 3 à 10 atomes de carbone, comme composé bromé.

2. Procédé selon la revendication 1, caractérisé par le fait que le composé bromé allylique est le bromure d'allyle, le bromure de méthallyle, le 2 - (bromométhyl) - 3 - bromo-propène, 3,3 - dibromo - 1 - propène, 3 - bromo-1 - pentène, 3,4 - dibromo - 1 - butène, 2 - (di-bromométhyl) - 1 - butène, 2 - (bromométhyl)-1 - butène, 2 - (bromométhyl) - 1 - pentène, 2-(dibromométhyl) - 1 - pentène, 2 - (bromométhyl) - 1 - hexène, 3 - bromo - 1 - hexène, 2-(dibromométhyl) - 1 - hexène, ou un mélange des ces produits.

## Patentansprüche

1. Verfahren zur Herstellung von schlagzähen Polystyrolen von verbesserter Transparenz durch Polymerisieren einer Lösung eines Kautschuks in Styrol oder in einer Mischung von Styrol mit 35 Gewichtsprozent oder weniger Vinyltoluol, t-Butylstyrol oder Methylmethacrylat in Gegenwart einer bromhaltigen Verbindung, wobei die Polymerisation unter frei-radikalischen Bedingungen und unter Rühren mindestens bis zur Phasenumkehr durchgeführt wird, dadurch gekennzeichnet, daß die Polymerisation in Gegenwart von 0,01 bis 0,5 Gewichtsprozent, bezogen auf das Gesamtgewicht von Kautschuk und Styrol, einer monoethylenisch endständig ungesättigten allylischen bromhaltigen aliphatischen Verbindung mit 3 bis 10 Kohlenstoffatomen als bromhaltige Verbindung durchgeführt wird.

2. Verfahren nach Anspruch 1, dadurch gekennzeichnet, daß die allylische Bromverbindung Allylbromid, Methallylbromid, 2-(Brommethyl)-3-brompropen, 3,3-Dibrom-1-propen, 3-Brom-1-penten, 3,4-Dibrom-1-buten, 2-(Dibrommethyl)-1-buten, 2-(Brommethyl)-1-buten, 2-(Brommethyl)-1-penten, 2-(Dibrom-methyl)-1-penten, 2-(Brommethyl)-1-hexen, 3-Brom-1-hexen, 2-(Dibrommethyl)-1-hexen oder eine Mischung davon ist.